# EUROPÄISCHE PATENTSCHRIFT

(11) **EP 0 796 859 B1**
(45) Veröffentlichungstag und Bekanntmachung des Hinweises auf die Patenterteilung: **31.07.2002**
(21) Anmeldenummer: 96104294.2
(22) Anmeldetag: 19.03.1996
(51) Int. Cl.: C07F 3/02, C07F 3/06, C07F 5/02, C07F 5/06

(54) **Stabile homogene Formulierungen von oxidationsempfindlichen metallorganischen Verbindungen in Paraffinen und Verfahren zu deren Herstellung**
Stable homogenous formulations of oxidation-sensitive organometallic compounds in paraffins and process for their preparation
Formulations homogènes et stables de composés organométalliques sensibles à l'oxydation dans des paraffines et procédé de leur préparation

(43) Veröffentlichungstag der Anmeldung: 24.09.1997
(73) Patentinhaber: Crompton GmbH, 59192 Bergkamen (DE)
(72) Erfinder: Rieger, Rainer, Dr., 44534 Lünen (DE); Volland, Hans-Günter, 59425 Unna (DE); Uzick, Wolfram, Dr., 59239 Schwerte (DE)

(56) Entgegenhaltungen:
- EP-A- 0 015 058
- EP-A- 0 040 141
- EP-A- 0 340 819
- GB-A- 900 132
- GB-A- 921 472
- PATENT ABSTRACTS OF JAPAN vol. 16, no. 566 (C-1009), 8.Dezember 1992 & JP-A-04 221389 (MITSUI TOATSU CHEM INC), 11.August 1992,

## Beschreibung

Metallorganische Verbindungen, wie z. B. Magnesiumalkyl-, Boralkyl-, Zinkalkylverbindungen oder Aluminiumalkyle und deren partielle Hydrolyseprodukte wie Aluminoxane, sind wichtige Bestandteile moderner chemischer Prozesse.

Die technisch gebräuchlichen Metallalkyle sind sehr reaktive Verbindungen. Eine wichtige Rolle für die technische Handhabung spielt ihre hohe Reaktivität, woduch bei der Handhabung erhöhte Sicherheitsvorkehrungen notwendig werden.

Kommen derartige Metallalkyle mit Luft in Berührung, so treten sofort sehr heftige Oxidations- und Zersetzungsreaktionen ein. Bei Aluminiumalkylen mit einer Anzahl von C-Atomen je Alkylgruppe von 1 bis 6 ist beispielsweise die freiwerdende Reaktionswärme so groß, daß es in der Regel zur Selbstentzündung kommt.

Die Eigenschaft der Selbstentzündlichkeit bzw. der Pyrophorizität von Metallalkylen und deren Lösungen macht besondere und aufwendige Sicherheitsvorkehrungen bei Handhabung, Lagerung und Transport zwingend erforderlich.

Wegen der großen Reaktionsfähigkeit dieser Verbindungen kommen als Lösungsmittel vor allem inerte aromatische oder gesättigte aliphatische Kohlenwasserstoffe in Betracht. Zu beachten ist, daß das Brandpotential relativ niedrig siedender Kohlenwasserstoffe durch gelöste Metallalkyle noch gesteigert wird, da die beim Auslaufen auftretende Oxidationswärme die Verdampfung des Lösemittels verstärkt. Selbst stark verdünnte Metallalkyl-Lösungen müssen unter Schutzgas gehandhabt werden, um eine Oxidation und damit eine Qualitätsminderung des Produkts zu verhindern.

Mit Wasser reagieren Metallalkyle noch heftiger als mit Luft. Bei dieser äußerst vehementen und sehr exothermen Reaktion wird z. B. im Falle der niederen Metallalkyle schlagartig eine große Menge an leicht entzündlichen Gasen frei. Mit steigender Temperatur treten zusätzlich Zersetzungsreaktionen auf.

EP-A-0 340 819 offenbart die Herstellung von Lithiumalkylen.

GB-A-921 472 beschreibt ein Verfahren zur Herstellung von Grignardreagenzien, d.h. Magnesiumverbindungen.

GB-A-900 132 zeigt ein Herstellungsverfahren für Metallalkylverbindungen auf, bei dem Aluminiumtrialkyle mitverwendet werden.

JP-A-04 22 1389 schließlich zeigt die Herstellung von Dialkylzinkverbindungen unter Verwendung von Aluminiumtrialkylen auf.

Im Gegensatz zu EP-A-0 340 819 offenbart die vorliegende Anmeldung die nicht pyrophore Zusammensetzung unter Verwendung teilweise hochflüchtiger, bei Raumtemperatur zumeist flüssiger Aluminiumalkyle.

Ein Nachteil besteht darin, daß einige der technisch relevanten metallorganischen Verbindungen in aliphatischen gesättigten Kohlenwassserstoffen oft nur beschränkt löslich sind. Aus diesem Grund, aber auch zur Vermeidung der Pyrophorizität und Selbstentzündung, sind oftmals sehr verdünnte Lösungen unumgänglich, verbunden mit den entsprechenden Nachteilen bei Transport und Lagerung. Insbesondere Methyl-Aluminoxan ist jedoch nur in aromatischen Kohlenwasserstoffen wie Benzol oder Toluol gut löslich. In höheren Konzentrationen besitzt es auch in diesen Lösungsmitteln nur eine beschränkte Haltbarkeit, da es zur Bildung von gelartigen Ausfällungen neigt. Die gelierten Lösungen sind inhomogen und nur noch schlecht handhabbar.

Aromatische Lösungsmittel an sich sind darüberhinaus wegen toxikologischer Bedenken umstritten, insbesondere in Zusammenhang mit Anwendungen von Katalysatorsystemen zur Herstellung von Polyolefinen, die Anwendung im Nahrungsmittelsektor und in der Medizin finden.

Aufgabe der vorliegenden Erfindung war es daher, diese Nachteile zu überwinden und homogene, hochkonzentrierte, über einen langen Zeitraum lagerstabile Formulierungen speziell von Aluminiumalkylen und chemisch ähnlichen Metallalkylen zu entwickeln, welche auch in höheren Konzentrationen weder selbstentzündlich noch pyrophor sind.

Diese Aufgabe wird dadurch gelöst, daß die Metallalkyle in hochsiedenden Kohlenwasserstoffen (Paraffine) von bei Raumtemperatur öliger oder wachsartiger Konsistenz mittels geeigneter Mischeinrichtungen gelöst, suspendiert oder dispergiert (im folgenden Formulierungen genannt) werden.

Zur Darstellung der erfindungsgemäßen Formulierungen entsprechend dem erfindungsgemäßen Verfahren bestehen grundsätzlich verschiedene Möglichkeiten z. B.:
M1) Darstellung der metallorganischen Verbindungen in einem nichtaromatischen Dispergier-/Suspendiermedium oder Lösungsmittel
M2) Lösen, Suspendieren oder Dispergieren von isolierten metallorganischen Verbindungen
M3) Vermischen von nichtaromatischen Lösungs- oder Dispergiermitteln mit Lösungen der metallorganischen Verbindungen und nachfolgender destillativer Abtrennung des Lösungsmittels unter Zurückbleiben der erfindungsgemäßen Lösungen, Suspensionen oder Dispersionen.

Zur Darstellung der Formulierungen können die metallorganischen Verbindungen in reiner als auch in geträgerter Form auf einem geeigneten Trägermaterial eingesetzt werden. Werden die metallorganischen Verbindungen in reiner Form eingesetzt, kann das Trägermaterial zu einem beliebigen Zeitpunkt der Verfahrensmöglichkeiten M1-M3 zugesetzt werden.

Als Beispiele zu den angeführten Verfahrensmöglichkeiten M1 - M3 seien explizit genannt:
Zu M1) : Die Darstellung eines Aluminoxans in dem nichtaromatischen hochsiedenden Lösungsmittel erfolgt analog der EP-A-0 623 624 in einem Strahlschlaufenreaktor. Die dabei auftretenden starken Scherkräfte führen zu einer guten Umsetzung des Aluminiumalkyls mit Wasser, ohne daß Totalhydrolyse zum anorganischen Al(OH)₃ eintritt. Abweichend von der genannten Patentanmeldung ist bei erhöhten Temperaturen zu arbeiten, da die hier verwandten Paraffine eine wesentlich höhere Viskosität besitzen und die gebildeten Formulierungen noch zu einem Anwachsen der Viskosität führen.
Zu M2) : Die Formulierung der in den hier verwandten flüssigen und wachsartigen Paraffinen unlöslichen Aluminoxane geschieht unter Ausnutzung hoher Scherkräfte, um eine möglichst homogene Feinstverteilung der - unlöslichen - Partikel zu bewirken. Dabei kann bei erhöhten wie auch erniedrigten Temperaturen gearbeitet werden. Die Konsistenz der gebildeten Formulierung ist dabei von den verwendeten Paraffinen und der Temperatur bei der Mischung abhängig.
Zu M3) : Das nichtaromatische Formulierungsmedium wird mit einer Lösung des Aluminoxans gemischt und nachfolgend das Lösemittel des Aluminoxans im Vakuum oder bei erhöhter Temperatur unter starker Agitation entfernt, so daß eine Lösung/Suspension/Dispersion verbleibt mit vergleichbaren Eigenschaften zu den Produkten der vorgenannten Verfahrensweisen.

Überraschenderweise konnte gefunden werden, daß die so hergestellten Aluminoxan-Formulierungen auch bei hohen Konzentrationen des Aluminoxans nicht mehr selbstentzündlich oder pyrophor sind. Sie sind sogar gegenüber Wasser - auch bei höheren Temperaturen - vergleichsweise stabil.

So reagieren sie bei direktem Kontakt mit Wasser nur unter mäßiger Methangasentwicklung, selbst bei einem Aluminiumgehalt der Formulierung von über 30 Gew.-% - entsprechend einem viel höheren Gehalt an metallorganischen Verbindungen, im Falle von Methylaluminoxan von ca. 65 - 70 Gew.-%.

Je nach verwendetem Formulierungsmedium können homogene, bei Raumtemperatur stabile, viskose aber noch pumpfähige Flüssigkeiten oder homogene, wachsartige bis rieselfähige Produkte erhalten werden.

Ein Gegenstand der Erfindung ist daher ein Verfahren zur Herstellung homogener Mischungen, bestehend im wesentlichen aus ein oder mehreren oxidations-empfindlichen Aluminoxanen und Formulierungsmedien in Form von natürlichen oder synthetischen, langkettigen, gegebenenfalls verzweigten flüssigen oder festen Kohlenwasserstoffen mit Siedepunkten über 150 °C und Viskositäten von mindestens 1 Pa*s bei 25 °C, wobei die Darstellung der metallorganischen Verbindung
A) nach an sich bekannten Verfahren direkt in den Formulierungsmedien oder
B) das isolierte Aluminoxan in den Formulierungsmedien suspendiert bzw. dispergiert wird oder
C) die nach bekannten Verfahren hergestellte Lösung der Aluminoxane in niedrigsiedendem Lösungsmittel in erster Stufe in den erfindungsgemäß mitverwendeten Formulierungsmedien eingebracht wird und in zweiter Stufe das niedrigsiedende Lösungsmittel entfernt wird,
gegebenenfalls unter Mitverwendung von üblichen anorganischen oder organischen Trägermaterialien, üblichen Hilfs- und Zusatzstoffen, Additiven.

Ein weiterer Gegenstand der Erfindung ist die gemäß dem erfindungsgemäßen Verfahren hergestellte Formulierung.

Weitere Gegenstände der Erfindung sind durch die Ansprüche gekennzeichnet.

Die erfindungsgemäß mitverwendeten Formulierungsmedien sind alle natürlichen oder synthetischen handelsüblichen, langkettigen, gegebenenfalls verzweigten flüssigen oder festen Kohlenwasserstoffe mit Siedepunkten über 150 °C, vorzugsweise über 200 °C, und Viskositäten von mindestens 1 Pa·s bei 25 °C.

Zu diesen Verbindungen gehören die Produktgruppen der sogenannten Weißöle, z. B. Witco White Mineral Oil Parol® (Warenzeichen der Witco Polymers + Resins B. V., Niederlande), Vaseline sowie paraffinische Wachse z. B. Terhell®, (Fa. Schümann).

Erfindungsgemäß mitverwendbare Wachse werden beispielsweise beschrieben in Kirk-Othmer, Encyclopedia of Chemical Technology, Interscience Publishers, John Wiley & Sons, New York City, 1984, 3rd Edition, Vol. 24, Seiten 471 - 478.

Der mitverwendete Kohlenwasserstoff ist unabhängig von der metallorganischen Verbindung und richtet sich in erster Linie nach den Anforderungen der Praxis hinsichtlich der späteren Verwendung.

Die metallorganischen Verbindungen können in sehr viel höheren Konzentrationen eingesetzt werden, als nach bisherigem Stand der Technik. Der untere Konzentrationsbereich von ca. 0,01 - 10 Gew.-%, bezogen auf Formulierung, ist unkritisch. Die erfindungsgemäß bevorzugten Bereiche liegen über ca. 10 - 20 Gew.-%, vorzugsweise zwischen 25 - 80 Gew.-%, bezogen auf Formulierung.

Als erfindungsgemäß mitverwendete oxidationsempfindliche metallorganische Verbindungen werden solche auf Basis der Elemente der Gruppen II A, III A, IV A, IV B, II B des Periodensystems der Elemente, vorzugsweise aluminiumorganische, bororganische, zinkorganische oder magnesiumorganische Substanzen allein oder in Mischungen oder als Komplexsalz eingesetzt wie beispielsweise R¹R²R³Al, R¹R²R³B, R¹R²Mg, R¹R²Zn, worin R¹, R²,R^{3,} gegebenenfalls unabhängig voneinander oder Heteroatome sind, z. B.: Tributylaluminium, Triisobutylaluminium, Trihexylaluminium, Trioctylaluminium, Diethylaluminiumchlorid, Ethylaluminiumsesquichlorid, Ethylaluminiumdichlorid, Diisobutylaluminiumchlorid, Isobutylaluminiumdichlorid, Diethylaluminiumjodid, Diisobutylaluminiumhydrid, Diethylaluminiumethoxid, Isoprenylaluminium, Dimethylaluminiumchlorid, Natriumbutylethyldihydridoaluminat, Methylaluminoxan, Ethylaluminoxan, Tetraethylaluminoxan, Methylaluminiumsesquichlorid, Tetraisobutyldialuminoxan, Trimethylaluminium, und/oder Triethylaluminium vorzugsweise in Mischungen mit mindestens einer der genannten Verbindungen sowie als komplexe Salzmischungen (z. B. EURELYTH® 5002, Warenzeichen der Witco GmbH, Deutschland), Diethylaluminiumhydrid, Hexaisobutyltetraaluminoxan, Diethyl(dimethylethylsilanolato)-aluminium, Diethyl-(ethylmethylsilanolato)-aluminium, Diisobutyl-(methylsilanolato)-aluminium, Tridodecylaluminium, Tripropylaluminium, Dipropylaluminiumchlorid, Dibutylmagnesium, Butylethylmagnesium, Butyloctylmagnesium, Butyloctylmagnesiumethoxid, Ethylaluminiumpropoxychlorid, Triethylbor, Dimethylzink, Diethylzink, Tris[pentafluorophenyl]boran und dessen Salze sowie Metallocenverbindungen wie in EP-A-0 480 390, EP-A-0 413 326, EP-A-0 530 908, EP-A-0 344 887, EP-A-0 420 436, EP-A-0 416 815, EP-A-0 520 732 beschrieben.

Als erfindungsgemäß mitverwendbare anorganische Trägermaterialien werden poröse Oxide eines oder mehrerer der Elemente der Gruppen IIA, IIIA oder IVA des Periodensystems der Elemente wie ZrO₂, TiO₂, B₂O₃, CaO, ZnO, BaO, vorzugsweise Al₂O₃ und MgO und insbesondere SiO₂, eingesetzt (DE 44 09 249).

Als erfindungsgemäß mitverwendbare organische Trägermaterialien beispielsweise kommen poröse, teilweise polymere Verbindungen wie Polyethylen, Polypropylen, Polystyrol, Zuckerderivate (Stärke, Amylose, Cyclodextrine) in Betracht.

### Beispiele

### Beispiel 1

Unter Stickstoff wurden in einem 500 mL Kolben mit randgängigem Rührer 230 g einer 30 %igen toluolischen Methylaluminoxan(MAO)-Lösung und 31 g Paraffin (Terhell® 5605, Warenzeichen der Fa. Schümann) unter Stickstoff vorgelegt.

Nach Erwärmen auf ca. 50 °C erhielt man eine homogene Lösung. Anschließend wurde im Vakuum bei einer Badtemperatur bis zu 75 °C und einem Vakuum bis 0,1 mbar das Toluol abdestilliert. Danach wurde abgekühlt und das erstarrte Produkt von der Kolbenwandung abgelöst. Nach Abkühlen unter äußerer Kühlung mit Trockeneis ließ sich der Feststoff zu einem feinkörnigen Feststoff zerkleinern.

Das ca. 66 % MAO (entsprechend 30 % Aluminium) enthaltende Pulver war nicht pyrophor oder selbstentzündlich.

### Beispiel 2

Unter Stickstoff-Schutzgasatmaosphäre wurden 52,4 g mit Methylaluminoxan geträgertes Silica (SYLOPOL® 2104, Warenzeichen der Fa. Grace) mit einem Aluminiumgehalt von 23,8 % vorgelegt und 3,14 g EURECEN® 5036 (1,2-Ethylen-bis-(1-indenyl)zirkonium-dichlorid) zugesetzt. Zu dieser Feststoffmischung wurden 111,1 g Weißöl Witco Parol® zugegeben und über einen Zeitraum von 2 Stunden gerührt. Man erhielt eine viskose, curryfarbene Suspension. Die resultierende Formulierung besitzt einen Aluminiumgehalt von 7,5 %, entsprechend einem Gehalt an metallorganischen Verbindungen von 33 %.

Die Formulierung war weder pyrophor noch selbstentzündlich.

### Beispiel 3

In einem Dreihalskolben wurden unter N₂ 56,8 g MAO/SiO₂ (Al-Gehalt 23,8 %) mit 40,1 g Witco White Mineral Oil Parol® eine halbe Stunde gerührt. Man erhielt ein noch immer fließfähiges, pulverförmiges Produkt mit einem Al-Gehalt von 13,95 % bzw. einem Feststoffgehalt (MAO/SiO₂) von 58,6 %. Diese Formulierung war ebenfalls nicht mehr pyrophor. Bei Wasserzutritt trat starke Gasentwicklung und teilweise Verkohlung ein; Entzündung konnte dabei allerdings nicht beobachtet werden.

### Beispiel 4

In einem Dreihalskolben wurden unter N₂ 26,3 g MAO-Feststoff (Al-Gehalt 39,2 %) mit 7,3 g Witco White Mineral Oil Parol® eine Stunde mit einem randgängigen Rührer gerührt. Man erhielt eine nichtpyrophore hochviskose Formulierung mit einem Al-Gehalt von 30,1 % und einem Trimethylaluminium(TMA)-Gehalt entsprechend 3,6 % Al.

Dies entsprach einem MAO-Gehalt von 57 % bzw. einem Feststoffgehalt von 78 %. Diese Formulierung reagierte auch bei direktem Kontakt mit Wasser nur mit Methanentwicklung; Entzündung wurde nie gefunden.

### Beispiel 5

In einem Dreihalskolben mit Thermometer, Stickstoffbegasung und Destillationsbrücke sowie einem randgängigen magnetgekoppelten Rührer wurden 402 g MAO-Lösung (30 %ig in Toluol; 13,2 % Al, 3,19 % Al als TMA, (mittleres Molgewicht: 1000 g/mol)) mit 219 g Weißöl Parol® gemischt. Bei maximal 32 °C wurde innerhalb von 6 Stunden das Toluol bei 0,1 bar unter intensiver Rührung abdestilliert.

Man erhielt 338 g einer viskosen, fließfähigen Suspension/Dispersion mit einem Al-Gehalt von 13,4 % und einem TMA-Gehalt von 1,5 als Al, deren Hydrolysegasbestimmung 174 NmL/g lieferte.

Der Al-Gehalt entsprach einem MAO-Gehalt von etwa 26 %.

Die Formulierung war weder pyrophor noch selbstentzündlich.

### Beispiel 6

In einem 500 ml Schlenckrohr (ein hohes Gefäß war notwendig, damit das zu starker Blasenbildung während der Vakuumbildung neigende Gemisch rührbar gehalten werden konnte) mit Stickstoffbegasung und Destillationsbrücke sowie einem randgängigen magnetgekoppelten Rührer wurden 128,4 g MAO-Lösung (30 %ig in Toluol; 13,2 % Al, 3,19 % Al als TMA, (mittles Molgewicht: 1000 g/mol)) mit 84 g White Petroleum Jelly Snow White® MD (Handelsprodukt der Fa. Witco Polymers + Resins B.V., Niederlande gemischt. Bei 55 - 60 °C wurde das Gemisch homogen und bei 65 °C wurde das Toluol innerhalb von 6 Stunden bei 0,1 mbar unter intensiver Rührung abdestilliert.

Man erhielt 122 g einer farblosen wachsartigen Masse, die ab ca. 60 °C fließfähig war. Der Al-Gehalt betrug 12,0 %, der TMA-Gehalt betrug 1,5. Das Hydrolysegasvolumen betrug 145 NmL/g. Das entsprach einem MAO-Gehalt von 22,6 %.

Die Formulierung war weder pyrophor noch selbstentzündlich.

### Beispiel 7

33,5 g Methylaluminoxan (Feststoff) und 16,8 g Paraffin (Terhell® 5605, Warenzeichen der Fa. Schümann) werden unter Stickstoff in einem Rundkolben mit randgängigem Rührer erwärmt. Bei einer Badtemperatur von 65 - 70 °C erhielt man eine trübe Schmelze. Man ließ die Schmelze unter Rühren erstarren und löste die Schmelze dann von der Kolbenwandung ab. Nach Abkühlen unter äußerer Kühlung mit Trockeneis ließ sich der Feststoff zu einem feinkörnigen Feststoff zerkleinern.

Das ca. 66 % MAO (entsprechend 30 % Aluminium) enthaltende Pulver war nicht pyrophor oder selbstentzündlich.

### Beispiel 8

In einem 500 ml Schlenckrohr (ein hohes Gefäß war notwendig, damit das zu starker Blasenbildung während der Vakuumbehandlung neigende Gemisch rührbar gehalten werden konnte) mit Stickstoffbegasung und Destillationsbrücke sowie einem randgängigen magnetgekoppelten Rührer wurden 221 g BOMAG-A® (Warenzeichen der Witco GmbH) (20 % in Heptan, entsprechend 2,89 % Mg) mit 102 g Weißöl Parol® gemischt. Bei 40 °C wurde das Heptan innerhalb von 4,5 Stunden bei 0,1 mbar unter intensiver Rührung abdestilliert.

Man erhielt eine viskose Flüssigkeit mit einem Gesamt-Mg-Gehalt von 4,25 %; das entsprach einem BOMAG-A®-Gehalt von etwa 29,1 %.

Die Formulierung war weder pyrophor noch selbstentzündlich.

## Patentansprüche

1. Verfahren zur Herstellung homogener Mischungen, bestehend im wesentlichen aus ein oder mehreren oxidations-empfindlichen Aluminoxanen und Formulierungsmedien in Form von natürlichen oder synthetischen, langkettigen, gegebenenfalls verzweigten flüssigen oder festen Kohlenwasserstoffen mit Siedepunkten über 150 °C und Viskositäten von mindestens 1 Pa*s bei 25 °C, wobei die Darstellung der metallorganischen Verbindung
A) nach an sich bekannten Verfahren direkt in den Formulierungsmedien oder
B) das isolierte Aluminoxan in den Formulierungsmedien suspendiert bzw. dispergiert wird oder
C) die nach bekannten Verfahren hergestellte Lösung der Aluminoxane in niedrigsiedendem Lösungsmittel in erster Stufe in den erfindungsgemäß mitverwendeten Formulierungsmedien eingebracht wird und in zweiter Stufe das niedrigsiedende Lösungsmittel entfernt wird,
gegebenenfalls unter Mitverwendung von üblichen anorganischen oder organischen Trägermaterialien, üblichen Hilfs- und Zusatzstoffen, Additiven.

2. Verfahren gemäß Anspruch 1, **dadurch gekennzeichnet, dass** als Aluminoxan Methylaluminoxan eingesetzt wird.

3. Verfahren gemäß einem der Ansprüche 1-2, **dadurch gekennzeichnet, dass** das Aluminoxan in Konzentrationen von 0,01 Gew.-% bis 80 Gew.-%, bezogen auf die Gesamtmischung, mitverwendet wird.

4. Verfahren gemäß einem der Ansprüche 1-3, **dadurch gekennzeichnet, dass** die eingesetzten Kohlenwasserstoffe Siedepunkte von über 200 °C aufweisen.

5. Formulierung, hergestellt nach einem Verfahren gemäß einem der Ansprüche 1-4.

## Claims

1. Process for preparing homogeneous mixtures consisting essentially of one or more oxidation-sensitive aluminoxanes and formulation media in the form of natural or synthetic, long-chain, branched or unbranched, liquid or solid hydrocarbons having boiling points above 150°C and viscosities of at least 1 Pa*s at 25°C, wherein
A) the organometallic compound is prepared by methods known per se directly in the formulation media or
B) the isolated aluminoxane is suspended or dispersed in the formulation media or
C) the solution of aluminoxanes in a low-boiling solvent prepared by known methods is introduced into the formulation media used according to the invention in a first step and the low-boiling solvent is removed in a second step,
if desired with concomitant use of customary inorganic or organic support materials, customary auxiliaries and additives, modifiers.

2. Process according to Claim 1, **characterized in that** the aluminoxane used is methylaluminoxane.

3. Process according to Claim 1 or 2, **characterized in that** the aluminoxane is used in concentrations of from 0.01% by weight to 80% by weight, based on the total mixture.

4. Process according to any of Claims 1-3, **characterized in that** the hydrocarbons used have boiling points above 200°C.

5. Formulation prepared by a process according to any of Claims 1-4.

## Revendications

1. Procédé pour la préparation de mélanges homogènes, constitués essentiellement d'un ou plusieurs aluminoxannes sensibles à l'oxydation et de milieux de formulation sous forme d'hydrocarbures liquides ou solides, le cas échéant ramifiés, à chaîne longue, naturels ou synthétiques, présentant des points d'ébullition au-dessus de 150°C et des viscosités d'au moins 1 Pa.s à 25°C, dans lequel la préparation du composé organométallique
A) s'effectue selon des procédés connus en soi directement dans les milieux de formulation ou
B) l'aluminoxanne isolé est mis en suspension ou, selon le cas, dispersé dans les milieux de formulation ou
C) la solution, préparée selon des procédés connus, des aluminoxannes dans un solvant à bas point d'ébullition est introduite en une première étape dans les milieux de formulation utilisés conjointement selon l'invention et le solvant à bas point d'ébullition est éliminé dans une deuxième étape,
le cas échéant avec utilisation conjointe de matériaux support inorganiques ou organiques usuels, d'agents auxiliaires et adjuvants usuels, d'additifs.

2. Procédé selon la revendication 1, **caractérisé en ce que** l'aluminoxanne de méthyle est utilisé comme aluminoxanne.

3. Procédé selon l'une quelconque des revendications 1-2, **caractérisé en ce que** l'aluminoxanne est utilisé conjointement dans des concentrations de 0,01% en poids à 80% en poids, rapportées au mélange total.

4. Procédé selon l'une quelconque des revendications 1-3, **caractérisé en ce que** les hydrocarbures utilisés présentent des points d'ébullition de plus de 200°C.

5. Formulation, préparée selon un procédé selon l'une quelconque des revendications 1-4.
